# EUROPÄISCHE PATENTANMELDUNG

(11) **EP 1 964 708 A2**
(43) Veröffentlichungstag der Anmeldung: **03.09.2008**
(21) Anmeldenummer: 08003910.0
(22) Anmeldetag: 03.03.2008
(51) Int. Cl.: B60L 11/12, B60L 7/14

(54) **Flurförderzeug mit einem Fahrmodus und einem Bremsmodus**

(30) Priorität: 02.03.2007 DE 102007010621; 09.08.2007 DE 102007037693
(71) Anmelder: VOLK Fahrzeugbau GmbH, 88339 Bad Waldsee (DE)
(72) Erfinder: Baur, Matthias, Dr., 89075 Ulm (DE)
(74) Vertreter: Roth, Klaus

(57) **Zusammenfassung**

Es wird ein Flurförderzeug, insbesondere Hybrid-Fahrersitz-Zugmaschine, mit wenigstens einem einen in einem elektrischen Leistungskreis (9, 10, 11) fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet ist, wobei wenigstens eine verbrennungskraftmaschine (5), insbesondere ein Dieselmotor (5), zum Erzeugen einer das Fahrzeug antreibenden Antriebsenergie vorgesehen ist, wobei wenigstens ein von der Verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, vorgesehen ist, wobei wenigstens in einem Bremsmodus bzw. Rekuperationsmodus des Flurförderzeuges, insbesondere in einem Generator-Modus des Elektromotors (2), der Stromgenerator (6) als Antriebsmotor (6) zum Antreiben bzw. Anlegen eines Drehmoments an die Verbrennungskraftmaschine (5) ausgebildet ist, wobei eine Kontrolleinheit (3, 7) zum Kontrollieren des Wechsels zwischen Generator-Modus und Elektromotor-Modus des Stromgenerators (6) vorgesehen ist, vorgeschlagen, wobei die Nachteile des Stands der Technik vermieden werden. Dies wird erfindungsgemäß dadurch erreicht, dass die Kontrolleinheit (3, 7) zum Kontrollieren des Wechsels zwischen Generator-Modus und Elektromotor-Modus des Stromgenerators (6) in Abhängigkeit von der Stromrichtung des elektrischen Antriebsstroms im Leistungskreis (9, 10, 11) ausgebildet ist.

## Beschreibung

Die Erfindung betrifft ein Flurförderzeug, insbesondere eine Hybrid-Fahrsitz-Zugmaschine, mit wenigstens einem einen in einem elektrischen Leistungskreis fließenden Antriebsstrom aufweisenden, elektrisch angetriebenen Fahrmodus nach dem Oberbegriff des Anspruchs 1 sowie ein Verfahren zum Kontrollieren eines Flurförderzeuges nach dem Oberbegriff des Anspruchs 24.

### Stand der Technik

Flurförderzeuge, insbesondere Hybrid-Flurförderzeuge, mit einem Verbrennungsmotor und beispielsweise einem Elektroantrieb, vor allem für den gemischten Einsatz im Freien und in der Halle, sind bereits seit langem gebräuchlich. Entsprechende Hybrid-Flurförderzeuge werden beispielsweise auf Flughäfen, insbesondere als Gepäck-Zugmaschine oder dergleichen, und in der Industrie in unterschiedlichsten Ausführungen eingesetzt. Auf Flughäfen werden Gepäckschlepper eingesetzt, um das Gepäck der Passagiere von den Gepäckabfertigungsbereichen zum Flugzeug bzw. in umgekehrter Richtung zu transportieren.

Für den Einsatz auf Flughäfen sind Hybrid-Fahrersitz-Zugmaschinen besonders geeignet, weil es dort einerseits auf dem Flughafen-Vorfeld weite Strecken zwischen dem Terminalgebäude und den Parkpositionen der Flugzeuge zurückzulegen gilt, während andererseits auch die Einfahrt in die geschlossenen, meist unterirdischen Gepäckabfertigungsbereiche im Inneren der Flughafengebäude erforderlich ist. Während Letzteres mit einem reinen Dieselfahrzeug aus Emissionsgründen kaum möglich wäre, eignen sich reine Elektrofahrzeuge aufgrund ihrer begrenzten Batteriekapazität nur eingeschränkt für die Bewältigung weiter Strecken im Freien.

Bei einer Hybrid-Fahrersitz-Zugmaschine erzeugt dagegen z.B. während des Betriebs im Freien ein von einem Verbrennungsmotor angetriebener Generator Strom, der in die Traktionsbatterien des Fahrzeugs eingespeist wird. Da die Batterien folglich im verbrennungsmotorischen Betriebsmodus fortlaufend wieder aufgeladen werden, ist bei flughafentypischen Einsatzbedingungen, d.h. im Allgemeinen ca. 70-90 % Einsatz im Freien, 10-30 % Einsatz in geschlossenen Gebäuden, ein externes Aufladen der Batterien z.B. in einer Batterieladestation und/oder ein Wechseln der Batterien nicht erforderlich. Dies ist im durchgängigen Mehrschichtbetrieb - der auf Flughäfen die Regel ist - von großem Vorteil.

Bauartbedingt wird bei Hybrid-Fahrersitz-Zugmaschinen zwischen sogenannten Seriell-Hybridsystemen und Parallel-Hybridsystemen unterschieden. Bei einem Parallel-Hybridsystem liegen zwei parallele Antriebsstränge vor: In einem elektromotorischen Betriebsmodus werden die Antriebsräder vom Elektromotor angetrieben. In einem verbrennungsmotorischen Betriebsmodus werden die Antriebsräder dagegen direkt vom Dieselmotor angetrieben, wobei die Kraftübertragung typischerweise hydrostatisch erfolgt. Bei Seriell-Hybridsystemen besteht dagegen keine mechanische und/oder hydraulische Verbindung zwischen dem Verbrennungsmotor und den Antriebsrädern. Stattdessen werden die Antriebsräder stets vom Elektromotor angetrieben. Bei Zuschaltung des Verbrennungsmotors erzeugt dieser lediglich den erforderlichen Strom, um den Elektromotor zu betreiben und/oder die Batterien wieder aufzuladen.

Moderne Hybrid-Fahrersitz-Zugmaschinen weisen in der Regel eine sogenannte Rekuperationsbremse auf, mit der ein Teil der beim Bremsen abzubauenden Bewegungsenergie als elektrische Energie zurück gewonnen und in die Batterien des Fahrzeugs eingespeist wird.

Hybrid-Fahrersitz-Zugmaschinen verfügen dabei gewöhnlicherweise nicht nur über einen einzigen Rekuperations-Modus, sondern zumeist über sechs und mehr Rekuperationsmodi, für die häufig in der elektronischen Fahrsteuerung verschiedene Bremsrampen mit unterschiedlicher Bremsstärke hinterlegt sind: 1. Rekuperationsbremse, wenn der Fahrer während der Fahrt den Fuß vom Fahrpedal nimmt und/oder den Fahrtrichtungsschalter von der Vorwärts- bzw. Rückwärtsstellung in die Neutralstellung umlegt (Wegnahme des Fahrtrichtungssignals), 2. Rekuperationsbremse, wenn der Fahrer während der Fahrt den Fahrtrichtungsschalter von "vorwärts" auf "rückwärts" oder umgekehrt umlegt, 3. Rekuperationsbremse zur Realisierung beabsichtigter Geschwindigkeitsveränderungen, insbesondere Sollwertreduzierung des Fahrpedals, 4. Rekuperationsbremse, wenn der Fahrer beispielsweise von einem verbrennungsmotorischen Betriebsmodus in einen elektrischen Betriebsmodus wechselt und/oder von einem normalen Fahrmodus in einen Rampen- bzw. Schleichfahrtmodus, soweit für diese Betriebsmodi Maximalgeschwindigkeiten vorgesehen sind, die kleiner sind als die aktuelle Fahrgeschwindigkeit, 5. Rekuperationsbremse bei Überschreitung eines bestimmten Lenkeinschlagwinkels, soweit in diesem Fall eine Maximalgeschwindigkeit vorgesehen ist, die kleiner ist als die aktuelle Fahrgeschwindigkeit, und 6. Rekuperationsbremse zur Unterstützung der mechanischen Bremse bei einem Abbremsvorgang.

Durch die Rekuperationsbremse ergeben sich insbesondere drei Vorteile:

Die mechanischen Bremsen des Fahrzeugs werden entlastet. Dadurch tritt ein geringerer verschleiß an Bremsbelägen und/oder Bremsscheiben auf und die Bremsleistung wird verbessert. Bei der Verwendung von Lamellenbremsen kann eine Überhitzung des Öls und eine resultierende Beschädigung von Dichtungen oder Ähnlichem verhindert werden. Dies ist angesichts der zum Teil recht hohen Anhängelasten von bis zu 11,5 Tonnen im Flughafeneinsatz bzw. bis zu 30 Tonnen im Industrieeinsatz von großer Bedeutung.

Für den Fahrer ergibt sich durch die Rekuperationsbremse ein angenehmeres Fahrgefühl, da das Fahrzeug bereits beim Anheben des Fußes vom Fahrpedal - und folglich noch vor dem bzw. auch ohne Betätigen der Betriebsbremse - leicht verzögert. Dies ist zum Beispiel beim Heranrollen an unübersichtliche Verkehrssituationen vorteilhaft.

Durch die Energierückgewinnung beim Bremsen wird der Energiehaushalt des Fahrzeugs verbessert. Dieser Vorteil ist jedoch im Zugmaschineneinsatz von nachrangiger Bedeutung.

Als Zugmaschinen eingesetzte Hybrid-Fahrersitz-Zugmaschinen entsprechend dem Stand der Technik sind dabei meistens mit Drehstromantrieben und Blei-Säure-Akkumulatoren ausgestattet.

Charakteristisch für den Zugmaschineneinsatz ist, dass Zugmaschinen in der Industrie und auf Flughäfen schwere Lasten von bis zu 30 Tonnen ziehen. Berücksichtigt man, dass das Eigengewicht dieser Zugmaschinen meist zwischen 3,5 und 4,5 Tonnen liegt, so wird deutlich, dass die angehängte Last um ein Vielfaches schwerer ist als die Zugmaschine selbst.

Weiterhin ist charakteristisch, dass beispielsweise auf Flughäfen oft Hunderte von verschiedenen Anhängern unterschiedlichster Hersteller im Einsatz sind, deren Zugösendurchmesser vielfach deutlich voneinander abweichen. Da der Kupplungsbolzendurchmesser von Zugmaschinen sich jedoch notwendigerweise am jeweils kleinsten Zugösendurchmesser orientieren muss, kommt es vielfach zu einem mehr oder weniger großen Spiel zwischen Kupplungsbolzen und Zugöse. Beim Bremsen oder in Lastwechselsituationen ist in diesen Fällen vorübergehend keine formschlüssige Verbindung zwischen Zugmaschine und Anhänger gegeben. Die Anhänger nehmen daher erst zeitlich verspätet am Verzögerungsverlauf des Fahrzeugs teil, so dass beim Auflaufen bzw. Aufprallen der Anhänger ein kurzzeitiger Impuls von teils erheblicher Höhe auf die Zugmaschine einwirkt. Da Zugmaschinen auf Flughäfen typischerweise mit bis zu vier Anhängern betrieben werden, können sich durch die Addition der jeweiligen Abweichungen zwischen Bolzen- und Zugösendurchmesser kumulative Effekte ergeben, die eine Verstärkung des auf die Zugmaschine einwirkenden Aufpralls bzw. Impulses zur Folge haben.

Zudem ist charakteristisch für Drehstromantriebe, dass diese drehzahlgeregelt sind. Anders als herkömmliche Gleichstromantriebe versuchen Drehstromantriebe stets, die durch die Fahrpedalstellung vorgegebene Geschwindigkeit exakt beizubehalten, um so ein unbeabsichtigtes Beschleunigen oder Verzögern des Fahrzeugs zu verhindern. Daher können bereits geringfügige Bodenunebenheiten dazu führen, dass der Antriebsmotor innerhalb von Sekundenbruchteilen - quasi in Echtzeit - fortlaufend zwischen Elektromotor-Modus und Rekuperations-Modus hin- und her wechselt.

Das Gleiche gilt auch dann, wenn eine Zugmaschine im Zugbetrieb einen Impuls durch die auflaufenden Anhänger erfährt. Während Fahrzeuge mit Gleichstromantrieben durch einen derartigen Impuls einfach eine Beschleunigung erfahren, wechselt der Antriebsmotor bei Drehstromantrieben in dieser Situation innerhalb von Sekundenbruchteilen in den Rekuperationsmodus und versucht, eben diese (vom Fahrer nicht beabsichtigte) Beschleunigung zu verhindern.

Dies ist aufgrund des folgenden Umstands äußerst problematisch: In Flurförderzeugen entsprechend des Stands der Technik können für die unterschiedlichen, oben dargestellten Rekuperationsmodi verschiedene Parameter definiert und - beispielsweise in der Fahrsteuerung, insbesondere AC-Inverter - hinterlegt werden, um die Stärke und den zeitlichen Verlauf eines Rekuperationsvorgangs zu modulieren (sogenannte "Bremsrampen"). Je nach Einsatzzweck und Rekuperationsmodus wird die Stärke der Rekuperation dabei meist in einem mittleren bis niedrigen Bereich definiert, wodurch die Höhe potentieller Rekuperationsströme von vorneherein limitiert wird.

Im Falle eines exogen auf das Fahrzeug einwirkenden Impulses ist die Stärke der Rekuperation dagegen ausschließlich von der Stärke des Impulses und der Leistung des Antriebsmotors im aktuellen Drehzahlbereich abhängig. Dies bedeutet, dass ggfs. die maximale Leistung bzw. das maximale Drehmoment des Antriebsmotors ausgeschöpft wird, um eine ungewollte Beschleunigung der Zugmaschine zu verhindern. Dabei sind Drehstromantriebe in Zugmaschinen durch eine spezifische Wicklung typischerweise so konzipiert, dass ihr Drehmoment bei niedrigen Geschwindigkeiten sehr hoch ist und bei ansteigenden Geschwindigkeiten abnimmt.

Bei einem gegebenen Antriebsmotor gilt daher ceteris paribus: Je stärker der auf das Fahrzeug einwirkende Impuls und je niedriger die aktuelle Drehzahl des Antriebsmotors ist, desto höher sind die auftretenden Rekuperationsströme. Vergegenwärtigt man sich die erhebliche Gewichtsdifferenz zwischen Zugmaschine und Anhängern, so wird einerseits deutlich, dass die hierbei auftretenden Impulse sehr stark sein können. Andererseits gilt, dass die Fahrgeschwindigkeiten mit schweren Anhängern - speziell auf schlechtem Untergrund - tendenziell eher gering sind.

Als Zwischenfazit ist daher festzuhalten, dass gerade im Zugmaschineneinsatz mit Anhängern eine Bedingungskonstellation vorherrscht, die durch sehr hohe, sehr schnell ansteigende und nur kurzzeitig anliegende Rekuperationsströme ("Stromspitzen") gekennzeichnet ist.

Charakteristisch vor allem für Blei-Säure-Akkumulatoren ist, dass die elektro-chemischen Prozesse beim Be- und Entladen der Traktionsbatterien träge sind und folglich mit einer gewissen Zeitverzögerung ablaufen. Beim Laden eines Blei-Säure-Akkumulators muss das aus dem aufgelösten Bleisulfat gewonnene Blei zur Elektrodenoberfläche transportiert werden, so dass die vergleichsweise geringe Diffusionsgeschwindigkeit der Bleiionen (Pb2+) einen limitierenden Faktor bei der Aufnahme kurzzeitiger Ladeströme darstellt. Gerade kurzzeitig auftretende Rekuperationsströme, die durch eine hohe Stromanstiegsgeschwindigkeit und einen hohen Betrag der Stromstärke gekennzeichnet sind, d.h. vor allem "Stromspitzen", können daher selbst von einer ungeladenen Batterie nur begrenzt aufgenommen werden.

Im Zusammenspiel der drei Merkmale 1.) Zugmaschineneinsatz, 2.) Drehstromantrieb und 3.) Blei-Säure-Akkumulatoren ergeben sich in der Praxis spezifische Probleme:
Beim Auflaufen von Anhängern auf die Zugmaschine wechselt der Antriebsmotor innerhalb von Sekundenbruchteilen in den Rekuperationsmodus. Die resultierenden Rekuperationsströme sind vielfach sehr hoch, da erstens das Anhängergewicht ein Vielfaches des Zugmaschinengewichtes beträgt, da zweitens die Anhänger aufgrund der nicht gegebenen formschlüssigen Verbindung erst zeitverzögert am Verzögerungsverlauf der Zugmaschine teilhaben, so dass die resultierenden Verzögerungswerte sehr hoch sind, da drittens bei Bedarf das volle Drehmoment des Antriebsmotors ausgeschöpft wird, um eine ungewollte Beschleunigung zu verhindern, und da viertens das Drehmoment des Antriebsmotors speziell in den für Anhängerbetrieb typischen, niedrigen bis mittleren Geschwindigkeitsbereichen besonders hoch ist.

Zudem handelt es sich hier um Ströme, die nur sehr kurzzeitig - im Millisekunden- oder Sekundenbereich - fließen und/oder durch eine hohe Stromanstiegsgeschwindigkeit gekennzeichnet sind. Aufgrund der Trägheit der elektro-chemischen Prozesse zum Laden der Batterie, können die Akkumulatoren der Zugmaschine diese (ultra-) kurzzeitig fließenden, sehr hohen Ströme, in der Größenordnung von beispielsweise mehreren hundert Ampere, nur zum Teil aufnehmen. Dies gilt umso mehr, als in Hybrid-Fahrersitz-Zugmaschinen typischerweise Batterien mit einer vergleichsweise geringen Gesamtkapazität zum Einsatz kommen. Diese beträgt beispielsweise nur ca. 40-60 % der Batteriekapazität einer vergleichbaren, ähnlich leistungsstarken Elektro-Fahrersitz-Zugmaschine.

Die skizzierte Problematik kann bei leeren Batterien ebenso auftreten wie bei vollgeladenen Batterien und bei neuen Batterien ebenso wie bei alten. Ein zunehmender Sättigungsgrad bzw. Ladezustand der Batterien und/oder ein zunehmendes Alter der Batterien stellen jedoch Randbedingungen dar, die zur Verschärfung der skizzierten Problematik beitragen.

Besonders virulent ist die beschriebene Problematik in einem verbrennungsmotorischen Betriebsmodus von Hybrid-Fahrersitz-Zugmaschinen, da hier zusätzlich zum Rekuperationsstrom auch noch ein Generatorstrom in der Größenordnung von beispielsweise 200 bis 300 Ampere anliegt. Dies gilt in besonderem Maße im Fall von Seriell-Hybridsystemen. Aber auch bei Parallel-Hybridsystemen kann es - je nach Ausführungsform - in einem verbrennungsmotorischen Betriebsmodus zum Zusammentreffen von Generator- und Rekuperationsströmen kommen. Durch die Überlagerung der - ohnehin sehr hohen - Rekuperationsströme durch einen kontinuierlich anliegenden Generatorstrom von beispielsweise 200 bis 300 Ampere ergeben sich zum Teil sehr hohe Stromstärken.

Da die Traktionsbatterie die resultierenden Spitzenströme nicht aufnehmen kann, kommt es zu Spannungsspitzen, die eine Sicherheitsabschaltung und/oder Beschädigung der Fahrsteuerung, insbesondere AC-Inverter, und/oder anderer elektrischer und/oder elektronischer Komponenten des Fahrzeugs nach sich ziehen können. Eine Sicherheitsabschaltung der Fahrsteuerung, insbesondere AC-Inverter, erfolgt derzeit z.B. beim Modell "AC 3 Power" des führenden Herstellers ZAPI beispielsweise bei 115 Volt.

Bei einer Sicherheitsabschaltung und/oder Beschädigung der Fahrsteuerung, insbesondere AC-Inverter, fällt nicht nur die hydraulische Unterstützung der Lenkung und der Betriebsbremse aus. Viel problematischer ist vielmehr, dass es bei Fahrzeugen mit automatischer Feststellbremse, wie sie vielfach im Einsatz sind, zudem auch zum Einfallen der elektrohydraulisch gelüfteten Federspeicherzylinder kommt. Die Zugmaschine macht folglich völlig unvermittelt - für den Fahrer und den nachfolgenden Verkehr nicht vorhersehbar - eine Vollbremsung bis zum Stillstand. Dies ist aus sicherheitstechnischer Perspektive äußerst bedenklich, da es eine hohe Unfallgefahr bedingt. Zudem kann es bei wiederholtem Auftreten hohe Reparaturkosten zur Folge haben, z.B. für verschlissene Bremsbeläge der Feststellbremse oder defekte Fahrsteuerungen, insbesondere AC-Inverter.

Das beschriebene Problem wird wahrscheinlich in Zukunft stark an Bedeutung gewinnen, da der Trend zu immer stärkeren elektrischen Antriebsmotoren auch zur Folge hat, dass im Rekuperationsbetrieb zukünftig höhere Rekuperationsströme zu erwarten sind. Nach heutigem Stand der Technik verfügen. Hybrid-Fahrersitz-Zugmaschinen mit einer Betriebsspannung von 80 Volt über maximal 20 KW Antriebsleistung (60 Min.-Rating). Der Engpass hierbei sind die hohen Stromstärken, die aus der vergleichsweise geringen Spannung von nur 80 Volt resultieren. Denn die heute am Markt verfügbaren Fahrsteuerungen, insbesondere AC-Inverter, können z.B. maximal Ströme von ca. 650 Ampere bewältigen (vgl. z.B. ZAPI "AC 3 Power"). In den kommenden Jahren ist jedoch mit Fahrsteuerungen zu rechnen, die Ströme von bis zu 1.000 Ampere bewältigen können, was dann wiederum Antriebsleistungen von rund 30 KW ermöglichen würde.

In Hybrid-Fahrersitz-Zugmaschinen kommen entsprechend dem Stand der Technik gegenwärtig verschiedene Mechanismen zum Einsatz, um die dargestellte Problematik kurzzeitig sehr hoher, nicht vollständig von der Batterie aufnehmbarer Rekuperationsströme und daraus resultierender Spannungsspitzen zu entschärfen. Diese können je einzeln oder in beliebiger Kombination angewendet werden:
1.) Reduktion des der Ladespannung bzw. des Ladestroms Während eines Rekuperationsvorgangs kann der an den Dieselmotor angeflanschte Generator kurzzeitig abgeschaltet oder in der Leistung deutlich gedrosselt werden. Die Traktionsbatterie muss beim Verzögern folglich nur den Rekuperationsstrom aufnehmen, nicht aber - on top - den vom Generator erzeugten Strom. Bei Fahrzeugen entsprechend dem Stand der Technik wird diese Regelung durch einen Sensor "getriggert", der die Stellung des Fahrpedals erfasst. D.h. der Generator wird für einige Sekunden abgeschaltet bzw. in der Leistung gedrosselt, sobald das Fahrpedal freigegeben bzw. nicht mehr betätigt wird. Das bedeutet insbesondere:
   Die bloße Abschaltung des Generators greift bei der Lösung des dargestellten Problems zu kurz, da die Stärke des vom Generators kontinuierlich erzeugten Stroms mit beispielsweise 200 bis 300 Ampere geringer ist als die beim Rekuperieren kurzzeitig möglichen Stromspitzen. Wie oben dargelegt, wird die Problematik kurzzeitig sehr hoher, nicht vollständig von der Batterie aufnehmbarer Rekuperationsströme und daraus resultierender Spannungsspitzen durch das gleichzeitige Anliegen eines Generatorstroms lediglich verschärft, aber als solche nicht begründet.
   Nachteilig ist weiterhin, dass eine Reduzierung des Ladestroms nur bei vollständiger Freigabe des Fahrpedals erfolgt [0 = Sollwert_{NEU} < Sollwert_{ALT}]. Da der Antriebsmotor jedoch auch bei einer Sollwertreduzierung des Fahrpedals, d.h. bei einer Reduzierung des Pedalwegs bzw. der Fahrpedalstellung [0 < Sollwert_{NEU} < Sollwert_{ALT}] in einen Rekuperationsmodus wechselt, kann das Aufeinandertreffen von Lade- und Rekuperationsströmen durch diese Art der Regelung nicht zuverlässig verhindert werden.
   Nachteilig ist weiterhin, dass die Auslösung der beschriebenen Generatorabschaltung über die Fahrpedalstellung bei modernen Drehstromantrieben generell zu kurz greift. Denn moderne Drehstromantriebe können selbst bei unveränderter Fahrpedalstellung in den Rekuperationsmodus wechseln. Dabei können verschiedene Fälle unterschieden werden:

   (a.) Wie oben dargestellt, wechseln Drehstrommotoren bereits bei geringfügigen Bodenunebenheiten und/oder an Gefällstrecken immer wieder in den Rekuperationsmodus, um die durch die Fahrpedalstellung vorgegebene Geschwindigkeit beizubehalten und eine ungewollte Beschleunigung des Fahrzeugs zu verhindern.
   (b.) Wird bei Bergabfahrt mit durchgetretenem Fahrpedal die bauartbedingte Höchstgeschwindigkeit und folglich die Maximaldrehzahl des elektrischen Antriebsmotors erreicht, beispielsweise 250 Hz entsprechend - je nach Getriebeübersetzung - ca. 30 km/h, dann setzt eine Rekuperationsbremsung ein, um eine weitere Beschleunigung des Fahrzeugs zu verhindern. Dies geschieht auch dann, wenn der Fahrer das Fahrpedal weiterhin voll durchtritt. Auf Flughäfen tritt eine derartige Situation sehr häufig ein, da es hier vielfach Unterführungen gibt, z.B. unter Start- und Landebahnen, welche die Fahrer mit Maximalgeschwindigkeit durchfahren. Diese weisen typischerweise ein Gefälle von rund 10 % auf.
   (c.) Wird der Fahrtrichtungsschalter des Fahrzeugs während der Fahrt aus der Vorwärts- in die Rückwärtsstellung gewechselt oder umgekehrt, dann findet ebenfalls eine Rekuperationsbremsung des Fahrzeugs bis zum Stillstand statt, um die anschließende Fahrtrichtungsänderung zu ermöglichen. Dies geschieht auch dann, wenn der Fahrer das Fahrpedal weiterhin voll durchtritt. Auch diese Situation tritt in der Praxis immer wieder ein, da die Fahrer im Rangierbetrieb aus Bequemlichkeit nicht immer mit dem Fuß zwischen Fahr- und Bremspedal hin und her wechseln.
   (d.) Wird der Fahrtrichtungsschalter des Fahrzeugs während der Fahrt aus der Vorwärts- bzw. Rückwärtsstellung in die Neutralstellung gebracht (Wegnahme de Fahrtrichtungssignals), dann findet ebenfalls eine Rekuperationsbremsung des Fahrzeugs bis zum Stillstand statt. Dies geschieht selbst dann, wenn der Fahrer das Fahrpedal weiterhin voll durchtritt.
   (e.) Speziell im Flughafeneinsatz werden bei Hybrid-Fahrersitz-Zugmaschinen oft unterschiedliche Maximalgeschwindigkeiten für den verbrennungsmotorischen und den rein elektromotorischen Betriebsmodus vorgesehen bzw. eingestellt. Dies hat im Wesentlichen den folgenden Grund: Es kommt häufig vor, dass die Fahrer - entgegen einschlägiger Anweisungen - den Verbrennungsmotor im Freien nicht anschalten, weil der verbrennungsmotorlose Antrieb deutlich leiser und für sie folglich angenehmer ist. Diese Incompliance hat negative Konsequenzen für die Energiebilanz entsprechender Fahrzeuge, da dann die Batterien während des Betriebs im Freien nicht mehr nachgeladen werden. Als Folge hiervon kann z.B. ein externes Nachladen der Batterien erforderlich werden, was entsprechende Stillstands- bzw. Ausfallzeiten nach sich zieht.
      Zur Lösung dieses Disziplinierungsproblems wird bei Fahrzeugen entsprechend des Stands der Technik die maximale Höchstgeschwindigkeit in einem rein elektromotorischen Betriebsmodus beispielsweise auf 10 bis 20 km/h reduziert, während in einem verbrennungsmotorischen Betriebsmodus höhere Maximalgeschwindigkeiten von z.B. 30 km/h zugelassen werden. Für die Fahrer wird dadurch ein Anreiz geschaffen, den Verbrennungsmotor im Freien anzuschalten - denn dies ermöglicht es ihnen, schneller zu fahren.
      Wechselt der Fahrer nun jedoch - beispielsweise bei der Einfahrt in einen Gepäckabfertigungsbereich im Gebäudeinneren - vom verbrennungsmotorischen Betriebsmodus in den rein elektromotorischen Betriebsmodus, so wird die Geschwindigkeit des Fahrzeugs durch eine Rekuperationsbremsung automatisch reduziert, sofern die aktuelle Fahrgeschwindigkeit größer ist als der für den rein elektromotorischen Betriebsmodus voreingestellte bzw. in der Fahrsteuerung hinterlegte Maximalwert. Eine solche Rekuperationsbremsung erfolgt auch dann, wenn der Fahrer das Fahrpedal während des Umschaltens weiterhin voll durchtritt. Da die Abschaltung des Verbrennungsmotors bis zum vollständigen Stillstand meist geringfügig zeitverzögert erfolgt, kann es in dieser Situation zu einer kurzzeitigen Überlagerung von Rekuperations- und Generatorströmen kommen.
   (f.) Manche Flurförderzeuge, insbesondere im Industrieeinsatz, sind mit einem sogenannten Rampen- bzw. Schleichfahrtschalter ausgestattet. Wird dieser betätigt, so wird die Maximalgeschwindigkeit des Fahrzeugs auf einen voreingestellen Wert von z.B. 4 km/h reduziert. Dadurch lässt sich die Geschwindigkeit auf Gefällstrecken verringern und präzise kontrollieren, was vor allem beim Betrieb auf Rampen mit hohen Anhängelasten von bis zu 30 Tonnen vorteilhaft ist. Erfolgt die Betätigung des Rampen- bzw. Schleichfahrtschalters bei einer aktuellen Fahrgeschwindigkeit, die höher ist als der für den Rampen- bzw. Schleichfahrtmodus voreingestellte bzw. in der Fahrsteuerung hinterlegte Wert, so erfolgt auch bei voll durchgetretenem Fahrpedal eine Rekuperationsbremsung.
   (g.) Aus Sicherheitsgründen verfügen Flurförderzeuge über sogenannte Totmannschalter, welche beispielsweise als Fußkontaktschalter ausgeführt sind. Nimmt der Fahrer während der Fahrt beispielsweise seinen linken Fuß vom Fußkontaktschalter, so erfolgt eine Rekuperationsbremsung auch dann, wenn er mit dem rechten Fuß weiterhin das Fahrpedal betätigt.
   (h.) In manchen Flurförderzeugen wird aus Sicherheitsgründen bei Kurvenfahrt die Fahrgeschwindigkeit reduziert.
   Beispielsweise erfolgt bei Überschreiten eines definierten Lenkeinschlagswinkels eine Reduktion der maximal zulässigen Fahrgeschwindigkeit auf einen voreingestellten Wert. Ist die aktuelle Fahrgeschwindigkeit des Fahrzeugs höher als dieser Wert, so erfolgt eine Rekuperationsbremsung auch dann, wenn der Fahrer das Fahrpedal weiterhin voll durchtritt.
   Nachteilig ist schließlich, dass bei der Auslösung der beschriebenen Generatorabschaltung über die Fahrpedalstellung keine zuverlässigen Informationen über den Endzeitpunkt des Rekuperationsvorgangs vorliegen. Zwar wird man im Regelfall davon ausgehen können, dass eine Rekuperationsbremsung spätestens dann beendet ist, wenn der Fahrer das Fahrpedal nach erfolgter Freigabe erneut betätigt. Probleme ergeben sich jedoch im umgekehrten Fall - wenn der Fahrer das Fahrpedal zunächst nicht wieder betätigt. So ist es in der Praxis beispielsweise üblich, dass ein entsprechendes Fahrzeug an der Parkposition eines Flugzeugs mit laufendem Dieselmotor abgestellt wird, um entstehende Wartezeiten zum Aufladen der Batterie zu nutzen. Eine solche Zwischenladung würde jedoch unmöglich werden, wenn ein beim Anhalten des Fahrzeugs beendeter Ladevorgang erst nach erneuter Betätigung des Fahrpedals wieder aufgenommen würde.
   Zur Lösung dieses Problems wird in Fahrzeugen entsprechend dem Stand der Technik beispielsweise ein festes Zeitintervall - z.B. mittels eines Zeitrelais - definiert, nach dessen Verstreichen der Generator nach erfolgter Ladestromreduzierung wieder auf seine Ausgangsleistung hochgefahren wird. Nachteilig an diesem Lösungsansatz ist insbesondere der folgende Sachverhalt: Wird das Zeitintervall für die Ladestromreduzierung zu kurz definiert, so kann ein. Zusammentreffen von Rekuperations- und Ladestrom nicht zuverlässig ausgeschlossen werden; wird es dagegen zu lang gewählt, so kann dies die Energiebilanz eines entsprechenden Fahrzeugs deutlich verschlechtern, weil der Generator gegebenenfalls - je nach Einsatzprofil - die Batterie kaum noch lädt.
2.) Reduktion des Rekuperationsstroms
   Die Stärke der Rekuperationsbremsung kann dauerhaft oder in Abhängigkeit vom Ladezustand der Batterien reduziert werden. Im zweiten Fall ist beispielsweise eine Regelung möglich, wonach die Stärke der Rekuperationsbremsung bei leeren Batterien bei 100 % liegt, während sie bei ganz vollen Batterien auf 0 % zurückgenommen wird. Bei vollen Batterien findet folglich keine Rekuperation mehr statt. Das bedeutet insbesondere:
   Der dauerhafte Verzicht auf eine Rekuperationsbremsung hat eine Verschlechterung des Fahrkomforts zur Folge. Ein Vorteil der Rekuperationsbremse ist ja gerade, dass das Fahrzeug bereits bei einer Sollwertreduzierung des Fahrpedals - und folglich noch vor dem bzw. auch ohne Betätigen der Betriebsbremse - leicht verzögert, was zum Beispiel beim Heranrollen an unübersichtliche Verkehrssituationen vorteilhaft ist.
   Der dauerhafte Verzicht auf eine Rekuperationsbremsung hat zudem einen höheren Verschleiß der mechanischen Bremskomponenten, wie beispielsweise Bremsbeläge und/oder Bremsscheiben, zur Folge. Dies ist gerade beim harten Flurförderzeugeinsatz problematisch, da entsprechende Fahrzeuge oft im durchgängigen Mehrschichtbetrieb mehrere tausend Betriebsstunden pro Jahr eingesetzt werden und der vorzeitige Austausch mechanischer Bremskomponenten insoweit zu einem Ausfall der Fahrzeuge führt.
   Darüber hinaus greift der dauerhafte Verzicht auf eine Rekuperationsbremsung aus den oben dargelegten Gründen in denjenigen Fällen zu kurz, in denen ein exogener Impuls auf die Zugmaschine einwirkt, also beispielsweise beim Auflaufen von Anhängern in Lastwechselsituationen und/oder auf unebener Fahrbahn. Denn in diesen Fällen bremst ein drehzahlgeregelter Drehstrommotor entsprechend dem Stand der Technik das Fahrzeug auch dann rekuperativ ab, wenn eine Rekuperationsbremsung in den verschiedenen, oben skizzierten Rekuperationsmodi ansonsten nicht vorgesehen ist.
   Auch die stufenweise oder kontinuierliche Reduzierung der Rekuperationsstärke bei zunehmendem Sättigungsgrad bzw. Ladezustand der Batterien stellt keine Lösung der skizzierten Probleme dar: Denn die Problematik kurzzeitig sehr hoher, nicht vollständig von der Batterie aufnehmbarer Rekuperationsströme und daraus resultierender Spannungsspitzen wird durch einen hohen Sättigungsgrad der Traktionsbatterie zwar verschärft, aber - wie oben erläutert - als solche nicht begründet.
   Die Reduzierung der Rekuperationsstärke in Abhängigkeit vom Ladezustand der Batterien hat zudem den Nachteil, dass sich hierbei ein unberechenbares bzw. zumindest gewöhnungsbedürftiges Fahrverhalten ergibt, da das Fahrzeug bei vollen Batterien schlechter verzögert als bei leeren Batterien. Dies ist nicht nur aus ergonomischer, sondern vor allem auch aus Arbeitssicherheitsperspektive problematisch.
3.) Reduktion der Ladeschlussspannung Bei der Definition der Ladekennlinie, mit der der Generator die Traktionsbatterie lädt, kann die sogenannte Ladeschlussspannung geringfügig reduziert werden, beispielsweise von 96 Volt auf 94 Volt. Dadurch wird verhindert, dass die Batterie durch den Generator zu 100 % aufgeladen wird. Die Batterien verfügen so stets über eine gewisse Restkapazität. Das bedeutet insbesondere:
   Ein solcher Ansatz ist besonders vorteilhaft, wenn es darum geht, eine gleichbleibend hohe Bremsleistung unabhängig vom
   Ladezustand der Batterie sicherzustellen. Da die Batterien durch die Reduzierung der Ladeschlussspannung stets über eine ungenutzte Restkapazität verfügen, kann auch bei längeren kontinuierlichen Rekuperationsbremsungen, beispielsweise bei längerer Bergabfahrt, sichergestellt werden, dass die Stärke der Rekuperationsbremsung nicht nachlässt.

Die Problematik kurzzeitig sehr hoher, nicht vollständig von der Batterie aufnehmbarer Rekuperationsströme und daraus resultierender Spannungsspitzen kann mit diesem Lösungsansatz dagegen nicht zuverlässig verhindert werden. Denn diese Problematik wird - wie oben dargelegt wurde - durch einen hohen Sättigungsgrad der Traktionsbatterie lediglich verschärft, aber als solche nicht begründet.

Zudem erweist sich als problematisch, dass die Reduktion der Ladeschlussspannung zu einer Verkürzung der Lebensdauer der Batterien führen kann, da diese nicht mehr vollständig geladen werden. Einer solchen Verkürzung der Lebensdauer kann zwar durch regelmäßige Ausgleichsladungen entgegengewirkt werden, doch stellen die damit verbundenen operativen Einschränkungen (insb. Stillstands- bzw. Ausfallzeiten der Fahrzeuge) gerade im durchgängigen Mehrschichtbetrieb, wie er für den Flughafen- und Industrieeinsatz typisch ist, ein großes Problem dar.

Dementsprechend kann die Problematik kurzzeitig sehr hoher, nicht vollständig von der Batterie aufnehmbarer Rekuperationsströme und daraus resultierender Spannungsspitzen durch keinen der dargestellten Lösungsansätze zuverlässig verhindert werden. Darüber hinaus zeigte sich, dass alle dargestellten Ansätze mit teils erheblichen Nachteilen bzw. Einschränkungen verbunden sind. Bei einer Kombination verschiedener Ansätze kommt es somit - bei möglicherweise nur geringfügig verbessertem Problemlösungspötential - zu einer Duplizierung bzw. Addition der jeweiligen Nachteile.

Zudem ist aus der DE 197 31 723 A1 ein Flurförderzeug bekannt, bei dem die Bremsenergie mit Hilfe einer Induktionsspule und einem zu beheizenden Heizkörper, insbesondere dem Gegengewicht eines Gabelstaplers, verheizt wird, das heißt insbesondere bei einem Gabelstapler nicht nur das Bremsen des Fahrzeugs, sondern auch das Herablassen der Gabel unter Last. Hierdurch soll überschüssige Energie wirkungsvoll und ohne Beeinträchtigung innerhalb des Fahrzeugs verbraucht werden. Dieses Verfahren eignet sich jedoch nicht bei Zugmaschinen in den genannten Anwendungsgebieten.

Weiterhin sind aus den Druckschriften DE 697 07 171 T2, DE 44 30 670 B4 oder DE 195 23 985 A1 Fahrzeugsteuerungen insbesondere für Hybridfahrzeuge bekannt, wobei der Generator des Verbrennungsmotors unter anderem zur Vernichtung überschüssiger Bremsenergie als Elektromotor betrieben werden kann, der in diesem Betriebsmodus den Verbrennungsmotor antreibt. Die Steuerung bzw. Regelung des Wechsels zwischen Elektromotor- und Generatormotor-Modus erfolgt hierbei unter Zuhilfenahme einer Sensorik zur Erfassung der Fahrpedalstellung und/oder einer Sensorik zur Erfassung des Ladezustandes der Traktionsbatterien des Fahrzeugs.

Eine aufwendige Sensorik bzw. Ladezustandsermittlung der Traktionsbatterie ist bei diesen Fahrzeugsteuerungen zwangsweise vorzusehen, um die überschüssige elektrische Energie entsprechend zu verbrauchen. Hierdurch soll vor allem die Bremswirkung möglichst unabhängig vom Ladezustand der Traktionsbatterie erhalten bleiben. Jedoch ist die exakte Ermittlung des Ladezustands der Traktionsbatterie sehr aufwendig. Dies gilt in besonderem Maße in einem verbrennungsmotorischen Betriebsmodus eines Hybridfahrzeugs, da hier die Batteriespannung, welche typischerweise zur Ladezustandsermittlung herangezogen wird, durch die Ladespannung des Generators überlagert und damit verfälscht wird.

Alle derzeitigen Ansätze können bestenfalls die Wahrscheinlichkeit des Auftretens kurzzeitig sehr hoher, nicht vollständig von der Batterie aufnehmbarer Rekuperationsströme und daraus resultierender Spannungsspitzen reduzieren, diese aber nicht sicher ausschließen.

### Aufgabe und Vorteile der Erfindung

Aufgabe der Erfindung ist es demgegenüber, ein Verfahren bzw. ein Flurförderzeug, insbesondere eine Hybrid-Fahrsitz-Zugmaschine vorzuschlagen, wobei die Nachteile des Stands der Technik im Wesentlichen vermieden werden.

Diese Aufgabe wird, von einem Flurförderzeug bzw. Verfahren der einleitend genannten Art, durch die kennzeichnenden Merkmale der Ansprüche 1 bzw. 24 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Flurförderzeug bzw. Verfahren dadurch aus, dass die Kontrolleinheit zum Kontrollieren des Wechsels zwischen Generatormodus und Elektromotormodus des Generators in Abhängigkeit von der Stromrichtung des elektrischen Antriebsstroms im Leistungskreis ausgebildet ist.

Mit Hilfe einer derartigen Kontrolleinheit gemäß der Erfindung, bei dem zwischen dem Elektromotor- und dem Generatormodus in Abhängigkeit der Stromrichtung des elektrischen Antriebsstroms im Leistungskreis gewechselt wird, kann eine besonders einfache, wirkungsvolle und betriebssichere Umstellung bzw. Wechsel erfolgen. Hierdurch können keine nachteiligen Strom- bzw. Spannungsspitzen im Leistungskreis gebildet werden, die beispielsweise zur Selbstabschaltung und/oder Beschädigung der Fahrzeugsteuerung und/oder anderer elektronischer und/oder elektrischer Fahrzeugkomponenten führen könnten.

Gemäß der Erfindung kann unabhängig von der Fahrpedalstellung und/oder vom Ladezustand der Traktionsbatterie in vorteilhafter Weise zwischen dem Generatormodus und dem Elektromotormodus des Generators gewechselt werden. Entsprechend wird eine besonders kostengünstige Lösung vorgeschlagen, die die Nachteile des Stands der Technik bzw. die vor allem auch das Problem einer durch Strom- bzw. Spannungsspitzen induzierten Selbstabschaltung und/oder Beschädigung der Fahrsteuerung und/oder anderer elektronischer und/oder elektrischer Fahrzeugkomponenten beim Auftreten nicht oder nicht vollständig von der Batterie aufnehmbarer Rekuperationsströme vollständig beseitigt.

Darüber hinaus wird im Unterschied zum Stand der Technik beim erfindungsgemäßen Ansatz eine möglichst energieeffiziente Nutzung der Rekuperationsenergie zur Verbesserung der Energiebilanz des Fahrzeugs nicht angestrebt, so dass die Erfindung völlig von der bisherigen Praxis abweicht und dieser sozusagen konträr gegenübersteht. Dies bedeutet, dass die sichere Betriebsweise eines entsprechenden Fahrzeugs das primäre Ziel der Erfindung ist und eine gewisse bzw. mögliche Energieverwertung gegenüber der sicheren Betriebsweise als nachrangig bzw. sekundär einzustufen ist. Letzteres ist speziell im Zugmaschineneinsatz kaum mit Nachteilen verbunden: Denn erstens kommt der Rekupertionsenergie in der Gesamtenergiebilanz einer Hybrid-Fahrersitz-Zugmachine ohnehin nur eine sehr untergeordnete Bedeutung zu. Und zweitens können eventuelle Einbußen beispielsweise problemlos durch eine größer dimensionierte Batterie kompensiert werden, ohne dass das entsprechende Zusatzgewicht eine abermalige Verschlechterung der Energiebilanz zur Folge hätte. Denn derartige Fahrzeuge müssen aus Traktionsgründen ohnehin über ein Eigengewicht von beispielsweise 3.5 bis 4.5 Tonnen verfügen, was beispielsweise durch die Verwendung massiver Stahlplatten mit einer Dicke von bis zu 5 Zentimeter erreicht wird.

Vorteilhafterweise ist die Kontrolleinheit zum Kontrollieren des Wechsels zwischen dem Generatormodus und Elektromotormodus des Generators in Abhängigkeit von der Stromrichtung und der Stromstärke des elektrischen Antriebsstroms im Leistungskreis ausgebildet. Hiermit wird ermöglicht, dass beispielsweise bei sehr geringen Stromstärken nicht zwangsweise zwischen dem Generatormodus und dem Elektromotormodus des Generators gewechselt werden muss, um wenigstens teilweise eine gewisse Bremsenergie bzw. überschüssige elektrische Energie beispielsweise mit Hilfe der elektrischen Speichermittel zwischenzuspeichern und später bzw. bei Bedarf zu verwenden.

Es hat sich inder Praxis gezeigt, dass gemäß der Erfindung lediglich eine geringe Energieverschwendung realisiert wird. Dagegen wird gemäß der Erfindung jedoch eine absolut sichere Betriebsweise erreicht, d.h. Vermeidung der Selbstabschaltung bzw. Beschädigung von elektrischen Komponenten oder dergleichen und daraus resultierender Unfallgefahren.

Vorteilhafterweise ist wenigstens eine einen Sensor umfassende Sensoreinheit zum Erfassen der Stromrichtung und/oder der Stromstärke des elektrischen Antriebsstroms im Leistungskreis vorgesehen. Gegebenenfalls kann hier eine einzige Sensoreinheit oder auch separate Sensoreinheiten mit entsprechend speziellen Sensoren verwendet werden.

Vorzugsweise ist der Sensor als Messwiderstand ausgebildet. Derartige Messwiderstände bzw. sogenannte Shunts sind bereits in der Elektronik gebräuchlich, so dass auf handelsübliche Komponenten zurückgegriffen werden kann. Dies erhöht die Wirtschaftlichkeit der Erfindung.

Vorteilhafterweise weist die Kontrolleinheit wenigstens einen AC-Inverter auf. Entsprechende AC-Inverter sind in drehstrombetriebenen Hybrid-Fahrersitz-Zugmaschinen entsprechend dem Stand der Technik als Fahrsteuerung verbaut. Da im Regelfall folglich keine zusätzlichen Komponenten bzw. Bauteile erforderlich sind, wird die Wirtschaftlichkeit der Erfindung noch weiter verbessert.

Vorzugsweise ist ein Drehmoment des Generators im Elektromotormodus in die Drehrichtung des Verbrennungsmotors gerichtet. Hiermit wird erreicht, dass insbesondere eine Beanspruchung bzw. ein Verschleiß des Verbrennungsmotors durch den Wechsel in den Elektromotormodus des Generators vergleichsweise gering bzw. nicht vorhanden ist.

Vorzugsweise ist wenigstens eine Lastkontrolleinheit zum Kontrollieren des Verbrennungsmotors in Abhängigkeit der Verbrennungsmotorlast vorgesehen. Hiermit wird erreicht, dass der Verbrennungsmotor unverzüglich bzw. automatisch beim Wechsel vom Generatormodus in den Elektromotormodus gedrosselt bzw. heruntergeregelt wird. In vorteilhafter Weise wird die Brennstoffversorgung des Verbrennungsmotors vorzugsweise in Abhängigkeit der Last kontrolliert bzw. geregelt.

In einer besonderen Variante der Erfindung ist wenigstens eine Schubabschalteinheit zum Abschalten der Brennstoffversorgung des Verbrennungsmotors vorgesehen. Hiermit wird eine vollständige Abschaltung des Verbrennungsmotors beim Wechseln in den Elektromotormodus des Generators realisierbar. Dies ermöglicht eine besonders effiziente Betriebsweise des Flurförderzeugs, sowohl in Bezug zum Verbrauch überschüssiger Energie als auch bezüglich der Automatisierbarkeit des Betriebes.

Generell kann sowohl bei der lastabhängigen Kontrolle des Verbrennungsmotors als auch der Schubabschaltung bereits auf handelsübliche Verbrennungsmotoren mit entsprechender Funktionalität bzw. Steuer-/Kontrollmöglichkeit zurückgegriffen werden, so dass hierbei eine besonders wirtschaftlich günstige Realisierung der Erfindung möglich ist.

Zur Erhöhung des Energieverbrauchs im Elektromotormodus kann alternativ hierzu auch das Drehmoment des Generators im Elektromotormodus entgegen der Drehrichtung des Verbrennungsmotors gerichtet werden. Dies kann in bestimmten Fällen mehr überschüssige Energie verbrauchen, was als positiv zu werten ist.

In einer besonderen Weiterbildung der Erfindung ist der Generator als Anlasser des Verbrennungsmotors ausgebildet. Vorteilhafterweise wird die Größe des Generators derart dimensioniert, dass dieser zum Anlassen des Verbrennungsmotors herangezogen werden kann. Dementsprechend kann ein separater Anlasser entfallen, wie dies beim Stand der Technik derzeit noch üblich ist. Dementsprechend wirtschaftlich günstig ist die Erfindung.

In der Praxis kann es jedoch auch sinnvoll sein, zusätzlich - bzw. als Backup - auch einen konventionellen Anlasser und eine konventionelle Starterbatterie vorzusehen. Dadurch kann der Verbrennungsmotor im Notfall, beispielsweise bei vollständig leer gefahrener Traktionsbatterie noch manuell gestartet werden, um so die Traktionsbatterie wieder aufladen bzw. das Fahrzeug z.B. aus einer Gefahrenzone fortbewegen zu können. Der zuletzt genannte Aspekt ist gerade auf Flughäfen unter Sicherheitsgesichtspunkten von großer Bedeutung.

Der Vorteil der vorgeschlagenen Lösung liegt in diesem Falle vorrangig darin, dass ein übermäßiger Anlasserverschleiss vermieden werden kann. Dieser stellt in Hybrid-Fahrersitz-Zugmaschinen entsprechend dem Stand der Technik ein großes Problem dar, da beispielsweise auf Flughäfen der Verbrennungsmotor zumeist mehrere Dutzend mal am Tag an- und wieder ausgeschaltet wird, was eine drastisch beschleunigte Alterung bedingt. Konventionelle Anlasser weisen daher bisweilen bereits nach einer Betriebszeit von weniger als einem halben Jahr Defekte auf.

Darüber hinaus wird durch die vergleichsweise große Dimensionierung des Generators auch erreicht, dass durch diesen in einem Elektromotormodus relativ viel Energie verbraucht wird. In einem Generatormodus kann dagegen relativ viel Energie erzeugt werden, was sich vorteilhaft auf die Energiebilanz des Fahrzeugs auswirkt.

Vorteilhafterweise ist wenigstens eine Modulationseinheit zum Modulieren bzw. Aufteilen des Antriebstromes vorgesehen. Insbesondere ist die Modulationseinheit zum Modulieren bzw. Aufteilen des Antriebsstromes zwischen dem Generator und den Speichermitteln ausgebildet. Hierdurch wird erreicht, dass je nach Bedarf bzw. bei entsprechenden Rahmenbedingungen die überschüssige Energie vorzugsweise zwischen Generator und den Speichermitteln aufteilbar ist. Beispielsweise kann eine unterschiedliche Gewichtung der aufzuteilenden Energien zwischen Generator und Speichermitteln realisiert werden. Beispielsweise können 80 % in den im Elektromotormodus betriebenen Generator und 20 % in die Speichermittel geleitet werden.

In bevorzugten Varianten der Erfindung ist die Modulierung bzw. Aufteilung des Antriebsstromes in Abhängigkeit der Stromstärke des Antriebsstromes und/oder des Ladezustandes der Speichermittel und/oder in Abhängigkeit vom Alter der Speichermittel vorgesehen. Hierdurch kann eine vorteilhafte Aufteilung in Abhängigkeit besonders relevanter Rahmenbedingungen bzw. Parametern des Flurförderzeuges erfolgen.

Vorteilhafterweise ist wenigstens ein Bremssensor zum Erfassen der Stärke der Bremsung des Fahrers vorgesehen und vorzugsweise als Bremsdrucksensor zum Erfassen des Bremsdruckes eines Bremsfluids ausgebildet. Hierbei kann in wenigstens einem Bremskreis des Flurförderzeuges ein Bremssensor, insbesondere ein sogenannter Druckmessumformer vorgesehen werden, der die Stärke der Bremsung und/oder des Bremsdrucks erfasst und vorzugsweise ein entsprechendes elektrisches Signal an die Kontrolleinheit bzw. Fahrsteuerung generiert. Entsprechend kann die Stärke der Energievernichtung durch den im Elektromotormodus betriebenen Generator bzw. die Stärke der Rekuperationsbremsung an die Stärke der mechanischen Bremsung angepasst werden.

Gemäß dieser Ausführungsvariante der Erfindung ist es möglich, speziell z.B. bei Vollbremsungen sehr viel stärker mit der Rekuperationsbremse zu bremsen, als dies bislang der Fall ist. Denn die dabei erzeugten sehr hohen Ströme können durch die Anlegung eines Drehmoments an den Verbrennungs- bzw. Dieselmotor vernichtet werden und müssen nicht von der evtl. schon sehr vollen Traktionsbatterie aufgenommen werden. Dadurch wird eine Verbesserung der Bremsleistung, insb. bei Vollbremsungen, sowie ein verringerter Verschleiß der mechanischen Bremsanlage erreicht.

Als vorteilhafte Ausführungsvarianten der Erfindung kann wenigstens ein einziger Bremssensor vorgesehen werden oder in jedem der vorhandenen, zumeist mindestens zwei separaten Bremskreise des Fahrzeugs kann wenigstens ein separater Bremssensor bzw. Druckmessumformer vorgesehen werden. Dies ist beispielsweise bei Flurförderzeugen von besonderem vorteil, bei denen z.B. Vorder- und Hinterachse jeweils über einen separaten Bremskreis abgebremst werden. Da hierbei häufig an der Vorderachse Scheiben- und an der Hinterachse Lamellenbremsen montiert bzw. vorhanden sind, die im Allgemeinen über eine unterschiedlichen Funktionsweise und Bremsleistung verfügen, werden beide Bremskreise vorzugsweise mit jeweils unterschiedlichen Bremsdrücken beaufschlagt.

Alternativ oder in Kombination mit einem Bremsdrucksensor kann auch ein Sensor zur Erfassung des Bremspedalwegs, beispielsweise ein Potentiometer, vorsehen werden.

Die zuvor genannten Varianten der Erfindung sind deshalb von besonderem Vorteil, da die Bremsleistung im Rekuperationsmodus "Rekuperationsbremse zur Unterstützung der mechanischen Bremse" bislang zumeist auf einen festen Wert eingestellt ist, d.h. die Bremsleistung ist - unabhängig davon, wie stark der Fahrer tatsächlich auf das Bremspedal tritt - immer gleich groß. Der Einstellwert liegt gewöhnlich in einem mittleren Bereich, d.h. wenn der Fahrer nur schwach bremst, so ist die Rekuperationsbremsung stärker als sie eigentlich sein müsste, wenn der Fahrer dagegen eine Vollbremsung macht, so ist die Rekuperationsbremsung schwächer als sie eigentlich sein müsste. Diese Nachteile werden durch die zuvor genannten Varianten der Erfindung beseitigt.

In einer vorteilhaften Ausführungsvariante könnte wenigstens ein Kondensator im Leistungskreis des Fahrzeugs vorgesehen werden. Durch diesen ließen sich ggfs. diejenigen Rekuperationsströme "puffern" welche in der minimalen Zeitdifferenz zwischen der Umkehrung der Stromrichtung im Leistungskreis und dem Wechsel des Generators vom Generatorin den Elektromotormodus fließen. Da diese Zeitdifferenz, z.B. in Abhängigkeit der Taktfrequenz eines CAN-Buses, sehr klein ist und beispielsweise bei 100 Millisekunden oder weniger liegt, könnte ein entsprechender Kondensator sehr klein ausgeführt werden und wäre daher vergleichsweise kostengünstig.

In einer vorteilhaften Ausführungsvariante könnte ein Kondensator derart mit wenigstens einem spannungsbegrenzenden Bauteil, beispielsweise einer Transient Voltage Suppressor Diode (TVS-Diode), einer Zener Diode oder einem Varistor, kombiniert werden, dass eine Ladung des Kondensators nur beim Überschreiten einer bestimmten, als kritisch erachteten Mindestspannung erfolgt. Dadurch könnte verhindert werden, dass der Kondensator im normalen Betrieb bereits "vorgeladen" wird und folglich nur noch eine beschränkte Restkapazität zur Aufnahme von Strom- bzw. Spannungsspitzen aufweist. Idealerweise sollte die Durchbruchspannung des spannungsbegrenzenden Bauteils dazu oberhalb der Betriebsspannung des Fahrzeugs liegen und unterhalb der Abschaltspannung der Fahrsteuerung, insbesondere AC-Inverter.

Vorzugsweise treibt bei einem Flurförderzeug bzw. einer Hybrid-Fahrersitz-Zugmaschine der Verbrennungsmotor bzw. der Dieselmotor im Normalbetrieb den Strom-Generator an und erzeugt so vorzugsweise einen Ladestrom, der in die Batterien eingespeist wird. Der Generator ist in vorteilhafter Weise über eine Kupplung oder dergleichen direkt am Verbrennungsmotor angeflanscht und dreht sich daher in der Regel mit der gleichen Drehzahl wie der Dieselmotor.

Wird nun jedoch der Generator im laufenden Betrieb vom Generatormodus in den Elektromotormodus umgeschaltet, so ist es möglich, mit diesem den Dieselmotor anzutreiben bzw. zu beschleunigen und dabei den inneren Widerstand des mitlaufenden Dieselmotors zu nutzen, um den bei Bremsvorgängen erzeugten Rekuperationsstrom zu verbrauchen. Der am Dieselmotor angeflanschte Generator wird folglich beim Bremsvorgang kurzzeitig vom Stromerzeuger zum Stromverbraucher, so dass nicht nur der Rekuperationsstrom weitgehend verbraucht wird, sondern zudem auch der ansonsten anliegende Ladestrom vorübergehend wegfällt.

Ein Wechseln bzw. Umschalten zwischen dem Generatormodus und dem Elektromotormodus ist in Sekundenbruchteilen möglich, so dass ohne Zeitverzögerung auf Rekuperationsvorgänge reagiert werden kann. Die Drehzahl des Dieselmotors steigt dadurch im Allgemeinen vorübergehend leicht an, bevor sie anschließend wieder auf den von der Motorsteuerung vorgegeben Ausgangswert zurückgeht.

Da eine fahrpedalstellungsabhängige Regelung beim Umschalten des Generators vom Generatormodus in den Elektromotormodus aus den oben dargestellten Gründen zu kurz greift, erfolgt gemäß der Erfindung die Umschaltung in Abhängigkeit von der Stromflussrichtung und/oder Stromstärke im Leistungskreis des Fahrzeugs. Dadurch ist es möglich, exakt zu bestimmen, wann ein Rekuperationsvorgang beginnt, wie stark er ist und wann er wieder endet. Letzteres bedingt, dass auch das anschließende Zurückschalten vom Elektromotormodus in den Generatormodus in der gleichen Weise ausgelöst werden kann.

In einer vorteilhaften Ausführungsvariante werden Stromflussrichtung und Stromstärke über einen Sensor im Leistungs-Stromkreis des Fahrzeugs, beispielsweise einen sogenannten Shunt, abgegriffen und an die Generatorsteuerung weitergeleitet, um basierend darauf die Betriebsmodi des Generators/Elektromotors zu wechseln und gegebenenfalls die Höhe des hierbei übertragenen Drehmoments zu modulieren. Diese Ausführungsvariante bietet den Vorteil, dass sie auch in den Sonderfällen funktioniert, in welchen eine rein fahrpedalabhängige Regelung versagt, z.B. Bergabfahrt mit Maximalgeschwindigkeit und voll durchgetretenem Fahrpedal.

Zudem hat diese Ausführungsvariante gegenüber einer fahrpedalstellungsabhängigen, zeitrelaisgesteuerten Generatorabschaltung eine verbesserte Energiebilanz zur Folge. Denn das Zurückschalten vom Elektromotormodus in den Generatormodus erfolgt bei dieser Ausführungsvariante baldmöglichst und nicht erst nach dem Verstreichen eines vordefinierten Zeitintervalls, wie dies insbesondere bei einer zeitrelaisgesteuerten Regelung der Fall ist. Eine Verbesserung der Energiebilanz ist besonders dann zu erwarten, wenn das Einsatzprofil zahlreiche Rekuperationsvorgänge erforderlich macht.

In einer vorteilhaften Ausführungsvariante wird eine Verbindung zwischen der Fahrsteuerung, insbesondere einen AC-Inverter oder dergleichen, und der Generatorsteuerung vorgesehen. Da die Fahrsteuerung bzw. der AC-Inverter die aktuelle Stromrichtung und/oder Stromstärke vorzugsweise in Echtzeit erkennt, ist es möglich, Ausgangssignale der Fahrsteuerung bzw. des AC-Inverters zu nutzen, um mittels der Generatorsteuerung die Betriebsmodi des Generators zu wechseln und gegebenenfalls die Höhe des hierbei übertragenen Drehmoments zu modulieren. Zusätzliche Bauteile, wie beispielsweise ein Shunt, sind in dieser Ausführungsvariante folglich nicht erforderlich.

In einer weiteren Variante der Erfindung ist es möglich, die Intensität der Umschaltung vom Generatormodus in den Elektromotormodus in Abhängigkeit vom Batterieladezustand gestaffelt zu modulieren. So ist denkbar, z.B. bei einer zu weniger als 80 % aufgeladenen Batterie im Rekuperationsbetrieb in den Elektromotormodus umzuschalten, ohne dabei jedoch die volle Leistung des Generators auszuschöpfen. In diesem Fall würde folglich nur ein Teil der Rekuperationsenergie vernichtet werden. Bei einer Batterieladung von 80 % und darüber könnte dann im Rekuperationsbetrieb in den Elektromotormodus umgeschaltet und dabei zugleich die maximale Leistung des Generators ausgeschöpft werden. Sofern der Generator ähnlich dimensioniert ist wie der Elektromotor, was häufiger der Fall ist, könnte dabei dann die volle Rekuperationsenergie vernichtet werden. Der gestaffelte Ansatz dieser Ausführungsvariante hat eine nochmalige Verbesserung der Energiebilanz des Fahrzeugs zur Folge.

In einer vorteilhaften Ausführungsvariante könnte eine Software zum Umschalten bzw. Wechseln des Generators vom Generatormodus in den Elektromotormodus ein vorteilhaftes Programmmodul aufweisen bzw. hiermit erweitert werden, das auch das starterfreie Anlassen des Dieselmotors durch den Generator ermöglicht. Dadurch ist es möglich, mit minimalem Aufwand einen erheblichen Zusatznutzen zu realisieren, da Anlasser eines der am häufigsten benötigten Verschleißteile in Hybrid-Fahrersitz-Zugmaschinen darstellen.

Das vorgeschlagene System hat den Vorteil, dass es das eingangs beschriebene Problem - eine durch Strom- bzw. Spannungsspitzen induzierten Selbstabschaltung und/oder Beschädigung der Fahrsteuerung und/oder anderer elektronischer und/oder elektrischer Fahrzeugkomponenten beim Auftreten nicht oder nicht vollständig von der Batterie aufnehmbarer Rekuperationsströme - deutlich zuverlässiger verhindern kann als die hierfür bislang verwendeten Systeme.

Die mit den bisherigen Systemen verbundenen Nachteile werden gemäß der Erfindung vermieden, wie z.B. ungewohntes und/oder unberechenbares Fahrverhalten beim ständigen oder vorübergehenden Verzicht auf Rekuperation.

Das vorgeschlagene System hat zudem den Vorteil, dass es sehr kostengünstig umgesetzt werden kann, wobei im Allgemeinen keine wesentlichen bzw. kostenträchtigen zusätzlichen Bauteile benÖtigt werden. Die wesentlichen Komponenten des Systems - Dieselmotor mit angeflanschtem Generator, eine elektronische Generatorsteuerung sowie eine Fahrsteuerung, insbesondere AC-Inverter - sind vielmehr bereits serienmäßig vorhanden. Außerdem arbeitet das vorgeschlagene System nahezu verschleißfrei.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematisches Blockschaltbild eines erfindungsgemäßen Flurförderzeuges in einer ersten Ausführungsform,
- Figur 2: ein schematisches Blockschaltbild eines erfindungsgemäßen Flurförderzeugs in einem zweiten Ausführungsbeispiel,
- Figur 3: ein schematisches Blockschaltbild eines erfindungsgemäßen Flurförderzeugs in einer dritten Ausführungsform und
- Figur 4: ein schematisches Blockschaltbild eines erfindungsgemäßen Flurförderzeugs einer vierten Ausführungsvariante.

Gemäß den Figuren werden Laufräder 1 über einen Elektromotor 2 angetrieben. Der Elektromotor 2 ist über ein Getriebe 4 mit den Laufrädern 1 verbunden.

Eine Fahrsteuerung 3, die insbesondere als AC-Inverter ausgebildet ist, steuert bzw. kontrolliert den Elektromotor 2. Darüber hinaus ist ein Verbrennungsmotor 5 bzw. Dieselmotor 5 vorgesehen, der im Allgemeinen ohne Getriebeübersetzung oder dergleichen einen Generator 6 antreibt. Der Generator 6 erzeugt elektrische Energie, die vorzugsweise mittels einer Generatorsteuerung 7, insbesondere AC-Inverter, einer Traktionsbatterie 8 mittels Leitungen 9 zugeleitet wird.

Mittels Leitungen 10 und 11 wird die elektrische Energie des Generators 6 bzw. Dieselmotors 5 mit Hilfe der Fahrsteuerung 3 dem Elektromotor 2 zugeführt und dieser entsprechend gesteuert. Dementsprechend handelt es sich bei den abgebildeten Ausführungsvarianten um serielle Hybridfahrzeuge.

Darüber hinaus sind elektrische Steuerleitungen 12 vorgesehen, die in den Blockschaltbildern gestrichelt dargestellt sind. Insbesondere sind die Leitungen 12 zwischen der Fahrsteuerung 3 und der Generatorsteuerung 7 angeordnet.

Grundsätzlich kann der Generator 6 in einem Bremsmodus bzw. Rekuperationsmodus auch als Elektromotor 6 bzw. Antriebsmotor 6 im Sinn der Erfindung dienen. Hierbei ist der Elektromotor 2 als Generator ausgebildet, d.h. dieser erzeugt elektrische Energie, wodurch die Laufräder 1 gebremst werden. Der Wechsel erfolgt durch die Umkehrung der Stromrichtung in den Leitungen 11 bzw. 10 bzw. 9. Die Bremsenergie wird entsprechend der Erfindung über den als Antriebsmotor 6 funktionierenden Generator 6 und somit durch den Dieselmotor 5 verbraucht bzw. unschädlich gemacht.

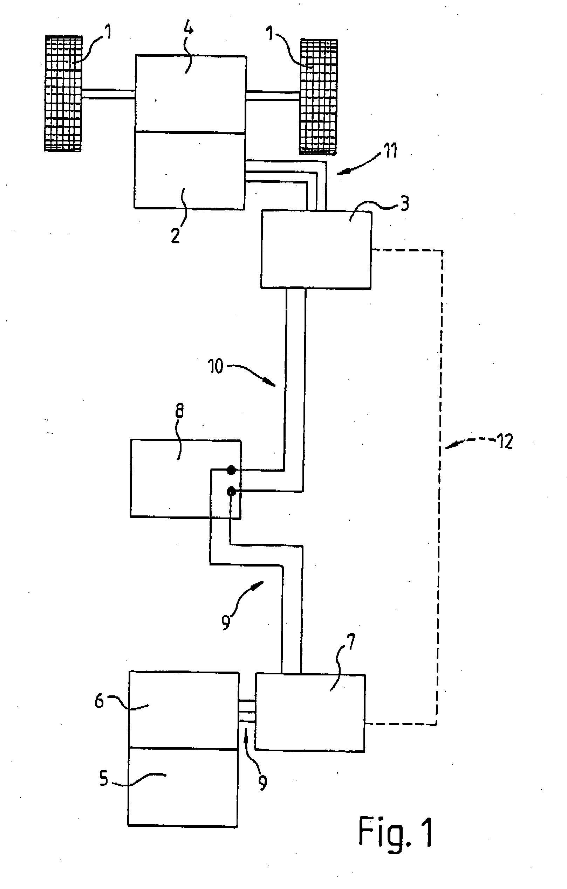

Gemäß dem Ausführungsbeispiel der Figur 1 sind keine Messwiederstände bzw. Shuntwiderstände vorgesehen. Dies kann als besonders einfache und vorteilhafte Ausführungsform angesehen werden, bei der die Stärke des in die Batterie 8 eingespeisten Stromes rein rechnerisch durch die Generator- bzw. Fahrsteuerung 7, 3 ermittelt wird. Die Realisierung dieser Variante umfasst insbesondere einen vorteilhaften Algorithmus zur Umrechnung von Drehstrom in Gleichstrom.

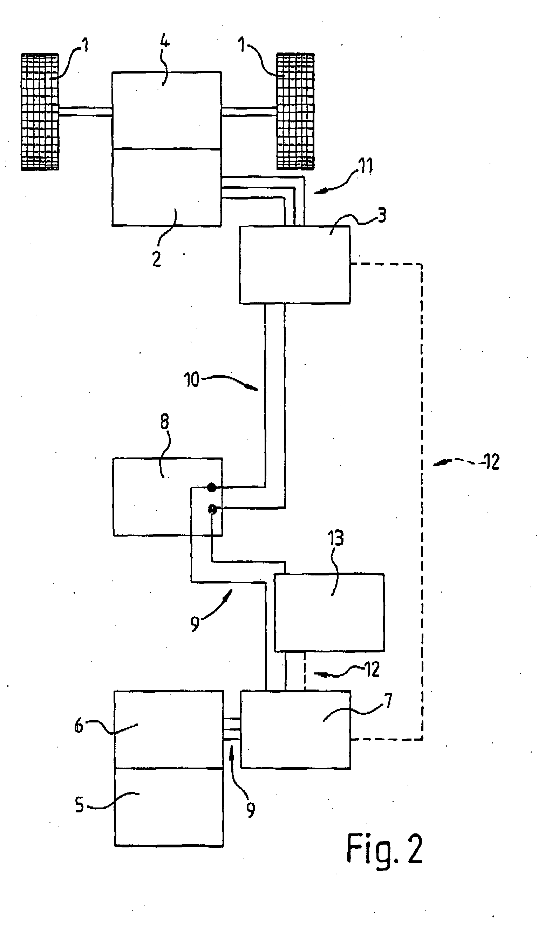

Gemäß der zweiten Ausführungsform, die in Figur 2 dargestellt ist, ist ein Messwiderstand 13 vorgesehen, der elektrisch zwischen der Generatorsteuerung 7 und der Traktionsbatterie 8 angeordnet ist. Der Messwiderstand 13 ist hierbei eingesetzt, um die Leistung des Generators 6 bzw. Elektromotors 6 im Generatormodus zu modulieren. Eine Modulierung der Leistung des Generators 6 bzw. Elektromotors 6 im Elektromotormodus ist hier nicht realisiert, da sie das System entsprechend aufwendiger machen würde. Bei dieser Ausführungsvariante ist die Stärke der Drehmomentübertragung auf den Dieselmotor 5 auf einen festen, vorgegebenen Wert eingestellt.

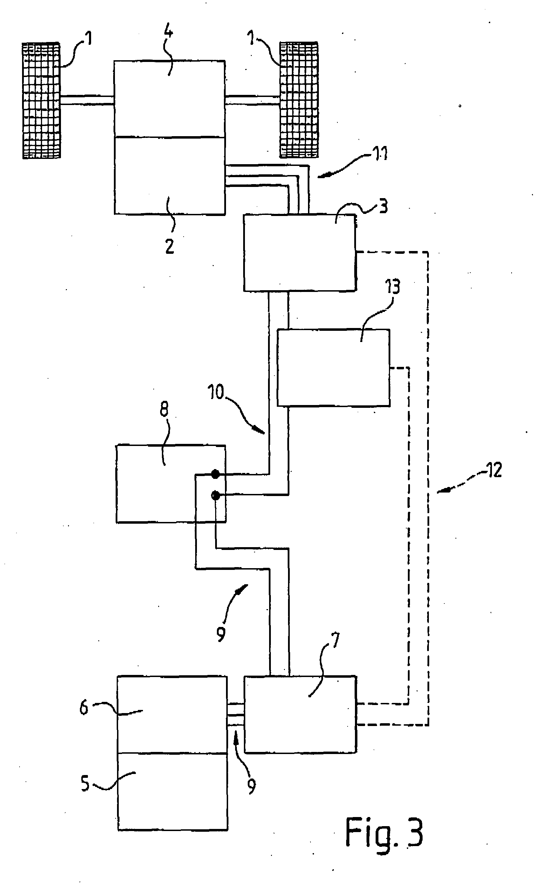

Gemäß dem Ausführungsbeispiel der Figur 3 ist der Messwiderstand 13 zwischen der Fahrsteuerung 3 und der Traktionsbatterie 8 angeordnet.

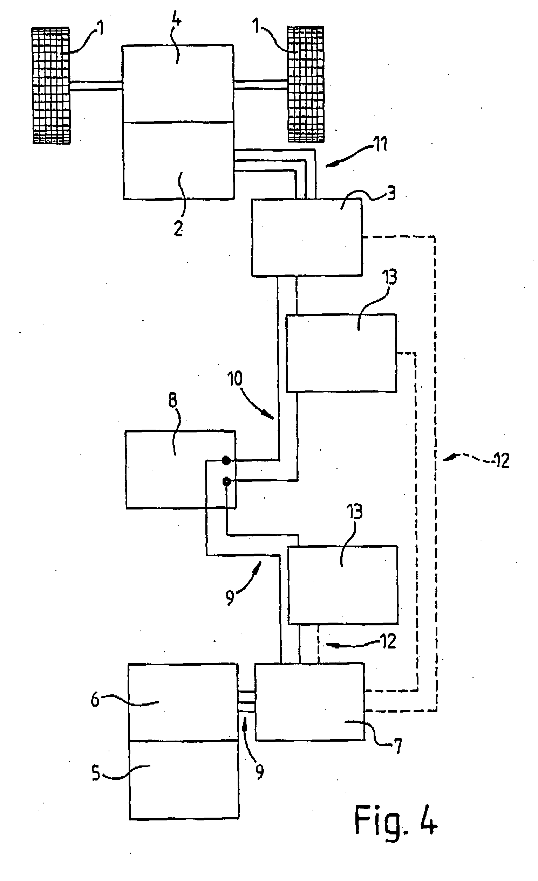

In Figur 4 ist eine vierte Ausführungsform der Erfindung dargestellt, wobei sowohl ein Messwiderstand 13 zwischen der Generatorsteuerung 7 und der Traktionsbatterie 8 als auch zwischen der Fahrsteuerung 3 und der Traktionsbatterie 8 angeordnet ist. Dies ist eine besonders vorteilhafte Variante, da sie es z.B. erlaubt, die Stärke der Drehmomentübertragung auf den Dieselmotor 5 in Abhängigkeit von der Stärke des Rekuperationsstroms zu modulieren. Das heißt, es kann immer exakt so viel Strom verbraucht bzw. vernichtet werden, wie durch den Rekuperationsvorgang tatsächlich erzeugt wird.

Die dargestellten Ausführungsbeispiele erheben keinen Anspruch auf Vollständigkeit der möglichen Varianten, sondern sollen lediglich beispielhaften Charakter besitzen. Zudem können in der Praxis noch weitere Komponenten verwendet werden, die jedoch dem Fachmann geläufig sind, wie z.B. Datenleitungen, mit denen unter anderem Betriebsdaten wie Temperatur etc. übertragen werden können. Da diese jedoch für die Erfindung von untergeordneterem Interesse sind, wurden diese aus Gründen der Übersichtlichkeit in den Figuren nicht dargestellt.

### Bezugszeichenliste

- 1: Laufrad
- 2: Motor/Generator
- 3: Fahrsteuerung
- 4: Getriebe
- 5: Dieselmotor
- 6: Generator/Motor
- 7: Generatorsteuerung
- 8: Batterie
- 9: Leitung
- 10: Leitung
- 11: Leitung
- 12: Leitung
- 13: Messwiderstand

## Patentansprüche

1. Flurförderzeug, insbesondere Hybrid-Fahrersitz-Zugmaschine, mit wenigstens einem einen in einem elektrischen Leistungskreis (9, 10, 11) fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet ist, wobei wenigstens eine Verbrennungskraftmaschine (5), insbesondere ein Dieselmotor (5), zum Erzeugen einer das Fahrzeug antreibenden Antriebsenergie vorgesehen ist, wobei wenigstens ein von der verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, vorgesehen ist, wobei wenigstens in einem Bremsmodus bzw. Rekuperationsmodus des Flurförderzeuges, insbesondere in einem Generator-Modus des Elektromotors (2), der Stromgenerator (6) als Antriebsmotor (6) zum Antreiben bzw. Anlegen eines Drehmoments an die Verbrennungskraftmaschine (5) ausgebildet ist, wobei eine Kontrolleinheit (3, 7) zum Kontrollieren des Wechsels zwischen Generator-Modus und Elektromotor-Modus des Stromgenerators (6) vorgesehen ist, **dadurch gekennzeichnet, dass** die Kontrolleinheit (3, 7) zum Kontrollieren des Wechsels zwischen Generator-Modus und Elektromotor-Modus des Stromgenerators (6) in Abhängigkeit von der Stromrichtung des elektrischen Antriebsstroms im Leistungskreis (9, 10, 11) ausgebildet ist.

2. Flurförderzeug nach Anspruch 1, **dadurch gekennzeichnet, dass** die Kontrolleinheit (3, 7) zum Kontrollieren des Wechsels zwischen Generator-Modus und Elektromotor-Modus des Stromgenerators (6) in Abhängigkeit von der Stromrichtung und der Stromstärke des elektrischen Antriebsstroms im Leistungskreis (9, 10, 11) ausgebildet ist.

3. Flurförderzeug nach einem der vorgenannten Ansprüche, **dadurch gekennzeichnet, dass** wenigstens eine einen Sensor (13) umfassende Sensoreinheit (13) zum Erfassen der Stromrichtung des elektrischen Antriebsstroms im Leistungskreis (9, 10, 11) vorgesehen ist.

4. Flurförderzeug nach einem der vorgenannten Ansprüche, **dadurch gekennzeichnet, dass** wenigstens eine einen Sensor (13) umfassende Sensoreinheit (13) zum Erfassen der Stromstärke des elektrischen Antriebsstroms im Leistungskreis (9, 10, 11) vorgesehen ist.

5. Flurförderzeug nach einem der vorgenannten Ansprüche, **dadurch gekennzeichnet, dass** der Sensor (13) als Messwiderstand (13) ausgebildet ist.

6. Flurförderzeug nach einem der vorgenannten Ansprüche, **dadurch gekennzeichnet, dass** die Kontrolleinheit (3, 7) wenigstens einen AC-Inverter (3, 7) aufweist.

7. Flurförderzeug nach einem der vorgenannten Ansprüche, **dadurch gekennzeichnet, dass** ein Drehmoment des Stromgenerators (6) im Elektromotor-Modus in die Drehrichtung des Verbrennungsmotors (5) gerichtet ist.

8. Flurförderzeug nach einem der vorgenannten Ansprüche, **dadurch gekennzeichnet, dass** ein Drehmoment des Stromgenerators (6) im Elektromotor-Modus entgegen der Drehrichtung des Verbrennungsmotors (5) gerichtet ist.

9. Flurförderzeug nach einem der vorgenannten Ansprüche, **dadurch gekennzeichnet, dass** wenigstens eine Last-Kontrolleinheit zum Kontrollieren des Verbrennungsmotors (5) in Abhängigkeit der Verbrennungsmotorlast vorgesehen ist.

10. Flurförderzeug nach einem der vorgenannten Ansprüche, **dadurch gekennzeichnet, dass** wenigstens eine Schubabschalteinheit zum Abschalten der Brennstoffversorgung des Verbrennungsmotors (5) vorgesehen ist.

11. Flurförderzeug nach einem der vorgenannten Ansprüche, **dadurch gekennzeichnet, dass** der Stromgenerator (6) als Anlasser (6) des Verbrennungsmotors (5) ausgebildet ist.

12. Flurförderzeug nach einem der vorgenannten Ansprüche, **dadurch gekennzeichnet, dass** wenigstens eine, Modulationseinheit zum Modulieren bzw. Aufteilen des Antriebsstromes vorgesehen ist.

13. Flurförderzeug nach einem der vorgenannten Ansprüche, **dadurch gekennzeichnet, dass** die Modulationseinheit zum Modulieren bzw. Aufteilen des Antriebsstromes zwischen dem Stromgenerator (6) und den Speichermitteln (8) ausgebildet ist.

14. Flurförderzeug nach einem der vorgenannten Ansprüche, **dadurch gekennzeichnet, dass** die Modulationseinheit zum Modulieren bzw. Aufteilen des Antriebsstromes in Abhängigkeit der Stromstärke des Antriebsstroms ausgebildet ist.

15. Flurförderzeug nach einem der vorgenannten Ansprüche, **dadurch gekennzeichnet, dass** die Modulationseinheit zum Modulieren bzw. Aufteilen des Antriebsstromes in Abhängigkeit des Ladezustandes der Speichermittel (8) ausgebildet ist.

16. Flurförderzeug nach einem der vorgenannten Ansprüche, **dadurch gekennzeichnet, dass** die Modulationseinheit zum Modulieren bzw. Aufteilen des Antriebsstromes in Abhängigkeit vom Alter der Speichermittel (8) ausgebildet ist.

17. Flurförderzeug nach einem der vorgenannten Ansprüche, **dadurch gekennzeichnet, dass** wenigstens ein Bremssensor zum Erfassen der Stärke der Bremsung des Fahrers vorgesehen ist.

18. Flurförderzeug nach einem der vorgenannten Ansprüche, **dadurch gekennzeichnet, dass** der Bremssensor als Bremsdrucksensor zum Erfassen des Bremsdruckes eines Bremsfluids ausgebildet ist.

19. Flurförderzeug nach einem der vorgenannten Ansprüche, **dadurch gekennzeichnet, dass** im Leistungskreis wenigstens ein Kondensator vorgesehen ist.

20. Flurförderzeug nach einem der vorgenannten Ansprüche, **dadurch gekennzeichnet, dass** im Leistungskreis wenigstens ein spannungsbegrenzendes Bauteil vorgesehen ist.

21. Flurförderzeug nach einem der vorgenannten Ansprüche, **dadurch gekennzeichnet, dass** ein spannungsbegrenzendes Bauteil als Transient Voltage Suppressor Diode ausgebildet ist.

22. Flurförderzeug nach einem der vorgenannten Ansprüche, **dadurch gekennzeichnet, dass** ein spannungsbegrenzendes Bauteil als Zener Diode ausgebildet ist.

23. Flurförderzeug nach einem der vorgenannten Ansprüche, **dadurch gekennzeichnet, dass** ein spannungsbegrenzendes Bauteil als Varistor ausgebildet ist.

24. Verfahren zum Kontrollieren eines Flurförderzeug, insbesondere Hybrid-Fahrersitz-Zugmaschine, mit wenigstens einem einen in einem elektrischen Leistungskreis fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet wird, wobei wenigstens eine Verbrennungskraftmaschine (5), insbesondere ein Dieselmotor, zum Erzeugen einer das Fahrzeug antreibenden Antriebsenergie verwendet wird, wobei wenigstens ein von der Verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, verwendet wird, wobei wenigstens in einem Bremsmodus bzw. Rekuperationsmodus des Flurförderzeuges, insbesondere in einem Generator-Modus des Elektromotors, der Stromgenerator (6) als Antriebsmotor (6) zum Antreiben bzw. Anlegen eines Drehmoments an die Verbrennungskraftmaschine (5) ausgebildet wird, wobei eine Kontrolleinheit (3, 7) zum Kontrollieren des Wechsels zwischen Generator-Modus und Elektromotor-Modus des Stromgenerators (6) verwendet wird, **dadurch gekennzeichnet, dass** in Abhängigkeit von der Stromrichtung des elektrischen Antriebsstroms im Leistungskreis zwischen Generator-Modus und Elektromotor-Modus des Antriebsmotors (6) gewechselt wird.

25. Verfahren nach Anspruch 24, **dadurch gekennzeichnet, dass** ein Flurförderzeug nach einem der vorgenannten Ansprüche verwendet wird.
